# DEMANDE DE BREVET EUROPEEN

(11) **EP 3 657 825 A1**
(43) Date de publication de la demande: **27.05.2020**
(21) Numéro de dépôt: 19210103.8
(22) Date de dépôt: 19.11.2019
(51) Int. Cl.: H04W 4/06

(54) **PROCÉDÉS DE GESTION DE PARTAGE ET DE PARTAGE DE MESSAGES, DISPOSITIFS DE MESSAGERIE DE TYPES DISTINCTS LES METTANT EN OEUVRE**

(30) Priorité: 22.11.2018 FR 1872370
(71) Demandeur: ORANGE, 75015 Paris (FR)
(72) Inventeur: SIMON, Pierre-Henri, 92326 CHATILLON (FR)

(57) **Abrégé**

L'invention concerne le partage d'un message via un réseau de communication sur une autre messagerie, par exemple le partage d'email par SMS ou Tweets.

Un objet de l'invention est un procédé de gestion de partage d'un message d'un premier type à travers un réseau de communication comportant, suite à une sélection d'une commande de partage à partir d'une interface de reproduction du premier message du premier type, une intégration du contenu du premier message du premier type dans un deuxième message d'un deuxième type à transmettre à travers le réseau de communication, le deuxième type étant distinct du premier type.

Ainsi un message d'un premier type peut être partagé en utilisant une messagerie d'un type distinct, par exemple un courriel (email en anglais) peut être partagé par SMS, MMS, messages instantanés, Tweet (marque déposée)...

## Description

### Domaine technique

L'invention concerne le partage d'un message via un réseau de communication sur une autre messagerie, par exemple le partage d'email par SMS ou Tweets.

### État de la technique

Il existe aujourd'hui deux types de partages de données via un réseau de communication : soit l'utilisateur donne des droits d'accès à des fichiers stockés sur son réseau local ou un serveur à un ou plusieurs destinataires, soit l'utilisateur distribue les données partagées via le réseau de communication au(x) destinataire(s).

Le partage par autorisation d'accès notamment sur un serveur dédié tel que sur le Cloud est le type de partage qui permet de fournir l'accès à la plus grande variété de données à ces destinataires : images, vidéos, tableurs, texte, etc.

Ce type de partage n'a pas été configuré pour partager des échanges. Eventuellement, il est aussi possible de donner accès à ces échanges par email, SMS, MMS, Tweet lorsqu'ils sont sauvegardés sur de tels serveurs. Mais, dans le cas des échanges, le partage nécessite la sauvegarde préalable des échanges avant de pouvoir les partager. Cela entraîne une surcharge à la fois des réseaux de communication lors de la sauvegarde et de la mémoire de sauvegarde des serveurs de partage d'échanges qui ne seront peut-être jamais partagés.

Sur un site internet, une page de réseau social, une galerie d'images et/ou de vidéos, est généralement disponible au moins une icône de partage permettant de commander le partage respectivement de l'adresse du site internet ou de la page de réseau social, d'une image, d'une vidéo. Eventuellement, l'utilisateur a le choix entre plusieurs modes de partage par courriel mais aussi via SMS, MMS ou des réseaux sociaux tels que Twitter, Facebook (marques déposées), etc. Ainsi, l'utilisateur peut facilement partager des adresses ou des contenus multimédia entre plusieurs applications : envoyer une photo par SMS, sur Twitter, par courriel, etc. Cette fonction de partage est très utilisée, notamment sur les réseaux sociaux.

Néanmoins, ce type de partage ne permet pas non plus de tout partager. En particulier, il n'est pas possible de partager des échanges tels qu'un message notamment un courriel via un autre système de messagerie par exemple par SMS ou tweet car il est impossible de sortir de l'application de courriel.

Pourtant un tel partage est intéressant car il permet de transférer un message à une personne n'ayant pas d'adresse courriel par exemple ou n'étant pas connecté (pas d'abonnement internet mobile par exemple, messagerie non installée sur mobile ou pas de couverture internet).

### Exposé de l'invention

Un des buts de la présente invention est de remédier à des inconvénients de l'état de la technique.

Un objet de l'invention est un procédé de gestion de partage d'un message d'un premier type à travers un réseau de communication comportant, suite à une sélection d'une commande de partage à partir d'une interface de reproduction du premier message du premier type, une intégration du contenu du premier message du premier type dans un deuxième message d'un deuxième type à transmettre à travers le réseau de communication, le deuxième type étant distinct du premier type.

Ainsi un message d'un premier type peut être partagé en utilisant une messagerie d'un type distinct, par exemple un courriel (email en anglais) peut être partagé par SMS, MMS, messages instantanés, Tweet (marque déposée)...

Avantageusement, le procédé de gestion de partage comporte une ouverture d'une interface de saisie du deuxième message du deuxième type suite à la sélection d'une commande de partage à partir d'une interface de reproduction du premier message du premier type et préalablement à l'intégration.

Ainsi, le premier message partagé en utilisant une messagerie d'un deuxième type peut éventuellement être complété et/ou modifié par un utilisateur comme dans un simple transfert de courriel ou un partage de photo.

Avantageusement, l'intégration comporte un collage d'un texte (y compris éventuellement de liens hypertexte associés) correspondant à une copie du contenu du premier message déclenchée par la sélection.

Ainsi, le destinataire a accès au texte du premier message partagé dans le deuxième message, notamment pour le copier et/ou le modifier.

Avantageusement, l'intégration comporte une insertion d'une image du contenu du premier message déclenchée par la sélection.

Ainsi, le premier message peut être partagé via des messages de deuxième type n'acceptant pas de texte ou uniquement des textes brefs et des photos.

Avantageusement, l'intégration comporte une insertion d'un fichier message du contenu du premier message déclenchée par la sélection.

Ainsi, le destinataire du deuxième message peut rouvrir le premier message dans ce deuxième message avec un dispositif de messagerie du premier type notamment pour poursuivre la conversation via ce premier type de messagerie lorsque le destinataire est à nouveau connecté au réseau de communication ad hoc. Par exemple, le deuxième message de type MMS comporte le premier message qui est un courriel sous la forme d'un fichier « .msg ». Ainsi, le destinataire peut ouvrir et/ou importer le fichier « .msg » avec un dispositif de messagerie de type courriel, tel que Outlook (marque déposée) ou une messagerie opérateur ou fournisseur de service. Cela lui permet d'importer et/ou de stocker le premier message qui lui a été transféré au moyen du deuxième message dans ce dispositif de messagerie de type courriel et/ou, éventuellement, de poursuivre la conversation par courriel.

Avantageusement, le contenu du premier message comporte un en-tête du message du premier type.

Ainsi, le destinataire du deuxième message reçoit non seulement le corps du premier message mais aussi les informations concernant l'expéditeur, le(s) destinataire(s), la date d'émission et/ou l'objet du premier message facilitant notamment la poursuite de la conversation quel que soit le type de messagerie utilisé : premier ou deuxième type.

Un autre objet de l'invention est un procédé de partage d'un message d'un premier type à travers un réseau de communication comportant une sélection d'une commande de partage à partir d'une interface de reproduction du premier message du premier type, la commande de partage déclenchant une intégration du contenu du premier message du premier type dans un deuxième message d'un deuxième type à transmettre à travers le réseau de communication, le deuxième type étant distinct du premier type.

Avantageusement, le procédé de partage comporte une détermination d'une interface de saisie d'un message du deuxième type en fonction de la commande de partage sélectionnée.

Ainsi, l'émetteur du deuxième message peut choisir le type de messagerie utilisée pour le partage du premier message entre plusieurs dispositifs de messagerie disponibles sur le terminal de l'émetteur du deuxième message.

Un objet de l'invention est également un procédé de gestion de messages d'un premier type comportant
- une reproduction d'un premier message du premier type, et
- une reproduction d'une interface de sélection d'une commande de partage à partir d'une interface
de reproduction du premier message du premier type, la commande de partage déclenchant une intégration du contenu du premier message du premier type dans un deuxième message d'un deuxième type à transmettre à travers le réseau de communication, le deuxième type étant distinct du premier type.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un dispositif de messagerie et/ou d'un dispositif de gestion de partage et étant conçus pour commander l'exécution des différentes étapes de ce procédé.

L'invention vise donc aussi un programme comprenant des instructions de code de programme pour l'exécution des étapes du procédé de gestion de partage selon l'une quelconque des revendications 1 à 6 et/ou du procédé de partage selon la revendication 7 et/ou du procédé de gestion de messages du premier type selon la revendication 8 lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un distributeur de messages d'un premier type à travers un réseau de communication comportant une interface de sélection d'une commande de partage à partir de l'interface de reproduction du premier message du premier type, la commande de partage déclenchant un intégrateur du contenu du premier message du premier type dans un deuxième message d'un deuxième type à transmettre à travers le réseau de communication, le deuxième type étant distinct du premier type.

Un objet de l'invention est aussi un premier dispositif de messagerie d'un premier type comportant
- une interface de reproduction d'un premier message du premier type, et
- une interface de sélection d'une commande de partage à partir de l'interface de reproduction du premier message du premier type, la commande de partage déclenchant un intégrateur du contenu du premier message du premier type dans un deuxième message d'un deuxième type à transmettre à travers le réseau de communication, le deuxième type étant distinct du premier type.

Avantageusement, le premier dispositif de messagerie est du type messagerie électronique.

Un objet de l'invention est encore un gestionnaire de partage de messages d'un deuxième type comportant un intégrateur du contenu d'un premier message du premier type disponible dans un premier dispositif de messagerie du premier type dans un deuxième message d'un deuxième type à transmettre à travers le réseau de communication suite à une sélection d'une commande de partage à partir d'une interface de reproduction du premier message du premier type du premier dispositif de messagerie, le deuxième type étant distinct du premier type.

Un objet de l'invention est, en outre, un deuxième dispositif de messagerie d'un deuxième type comportant
- une interface de saisie d'un deuxième message à transmettre,
- une interface de reproduction du deuxième message à transmettre, et
- une connexion avec un intégrateur permettant d'intégrer le contenu d'un premier message du premier type disponible dans un premier dispositif de messagerie du premier type dans le deuxième message du deuxième type à transmettre à travers le réseau de communication suite à une sélection d'une commande de partage à partir d'une interface de reproduction du premier message du premier type du premier dispositif de messagerie, le deuxième type étant distinct du premier type.

Avantageusement, le deuxième dispositif de messagerie est d'un des types parmi les suivants :
- messagerie pour messages courts mobiles,
- messagerie pour messages multimédia mobiles,
- messagerie pour messages instantanés courts IP.

### Brève description des dessins

Les caractéristiques et avantages de l'invention apparaîtront plus clairement à la lecture de la description, faite à titre d'exemple, et des figures s'y rapportant qui représentent :
[Fig 1] Figure 1, un schéma simplifié du procédé de gestion de partage selon l'invention ;
[Fig 2] Figure 2, un schéma simplifié des procédés de partage et de gestion de messages d'un premier type selon l'invention ;
[Fig 3] Figure 3, des schémas simplifiés d'un distributeur de messages, d'un premier dispositif de messagerie d'un premier type, d'un gestionnaire de partage, d'un deuxième dispositif de messagerie d'un deuxième type selon l'invention, et d'une architecture les mettant en œuvre selon l'invention;
[Fig 4] Figure 4, un schéma simplifié d'un exemple de message d'un premier type selon l'invention; [Fig 5a] Figure 5, un schéma simplifié de messages du deuxième type intégrant le contenu d'un message d'un premier type distinct du deuxième type, sous forme d'une copie du contenu du message du premier type selon l'invention.
[Fig 5b] Figure 5b, un schéma simplifié de messages du deuxième type intégrant le contenu d'un message d'un premier type distinct du deuxième type sous forme d'une image du contenu du message du premier type selon l'invention.
[Fig 5c] Figure 5c, un schéma simplifié de messages du deuxième type intégrant le contenu d'un message d'un premier type distinct du deuxième type sous forme d'un fichier du message du premier type selon l'invention.

### Description des modes de réalisation

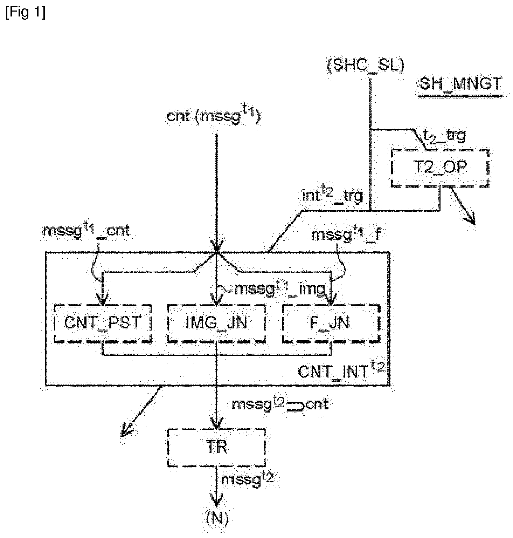

La figure 1 illustre un schéma simplifié du procédé de gestion de partage selon l'invention.

Le procédé de gestion de partage SH_MNGT d'un message d'un premier type *mssg*^{*t*1} à travers un réseau de communication N comporte, suite à une sélection d'une commande de partage SHC_SL à partir d'une interface de reproduction du premier message du premier type, une intégration du contenu du premier message du premier type CNT_INT^{t2} dans un deuxième message d'un deuxième type *mssg*^{*t*2} à transmettre à travers le réseau de communication N. Le deuxième type *t2* est distinct du premier type *t1.*

En particulier, l'intégration CNT_INT^{t2} est déclenchée *int*^{*t*2}_*trg* par la sélection d'une commande de partage SHC_SL.

En particulier, le procédé de gestion de partage SH_MNGT comporte une ouverture d'une interface de saisie du deuxième message du deuxième type T2_OP suite à la sélection d'une commande de partage SHC_SL à partir d'une interface de reproduction du premier message du premier type et préalablement à l'intégration CNT_INT^{t2}.

En particulier, l'intégration CNT_INT^{t2} est déclenchée *int*^{*t*2}_*trg* par l'ouverture de l'interface de saisie T2_OP, elle-même déclenchée *t2_trg* par la sélection d'une commande de partage SHC_SL.

En particulier, l'intégration CNT_INT^{t2} comporte un collage CNT_PST d'un texte correspondant à une copie du contenu du premier message *mssg*^{*t*1}*_cnt* déclenchée par la sélection SHC_SL.

En particulier, l'intégration CNT_INT^{t2} comporte une insertion d'une image IMG_JN du contenu du premier message *mssg*^{*t*1}_*img* déclenchée par la sélection SHC_SL.

En particulier, l'intégration CNT_INT^{t2} comporte une insertion d'un fichier message F_JN du contenu du premier message *mssg*^{*t*1}*_f* déclenchée par la sélection SHC_SL.

Dans un mode de réalisation particulier, la sélection d'une commande de partage SHC_SL déclenche la génération d'un deuxième message du deuxième type *mssg*^{*t*2}*.* Le deuxième message du deuxième type *mssg*^{*t*2} ainsi généré comporte le contenu du premier message du premier type *cnt(mssg*^{*t*1}): *mssg*^{*t*2} ⊃ *cnt.* Ce deuxième message du deuxième type *mssg*^{*t*2} est éventuellement reproduit permettant à l'utilisateur de compléter le contenu du premier message du premier type *cnt*(*mssg*^{*t*1}) qui y a été intégré par d'autres données : texte, image, vidéo, etc... saisies, sélectionnées, respectivement, dans un presse papier ou dans un répertoire d'images, vidéos, etc. ou capturées par reconnaissances vocales, manuscrites, caméra, etc.

Un procédé de gestion de message MSSG^{t2}_MNGT (non illustré) du deuxième type *mssg*^{*t*2} comporte une reproduction (non illustrée) d'un message du deuxième type.

En particulier, le procédé de gestion de messages du deuxième type MSSG^{t2}_MNGT comporte notamment une insertion de données D_JN dans le deuxième message du deuxième type *mssg*^{*t*2}*.* Notamment, les données comportent des données capturées et/ou des données saisies sur un terminal mettant en œuvre le procédé de gestion de messages du deuxième type MSSG^{t2}_MNGT.

En particulier, le procédé de gestion de messages du deuxième type MSSG^{t2}_MNGT comporte le procédé de gestion de partage illustré par la figure 1. L'insertion de données D_JN dans un deuxième message du deuxième type *mssg*^{*t*2} comporte, par exemple, l'intégration du contenu CNT_INT^{t2} du premier message du premier type *mssg^{t1}.*

En particulier, le procédé de gestion de messages du deuxième type MSSG^{t2}_MNGT comporte une émission du deuxième message du deuxième type *mssg*^{*t*2} intégrant le contenu du premier message du premier type *cnt*(*mssg*^{*t*1}) à travers le réseau de communication N à destination d'un utilisateur.

Par exemple, si le premier message est de type courriel (nommé « email » en anglais), le contenu *cnt*(*mssg*^{*t*1}) de cet email, c'est-à-dire du premier message, est intégré dans un deuxième message *mssg*^{*t*2}*,* notamment de type SMS, MMS ou Tweet..., permettant ainsi de transmettre à un utilisateur n'ayant pas accès aux emails (problème d'accès au serveur email ou pas de compte email) le contenu du premier message via une autre messagerie, par exemple par SMS ou MMS.

En particulier, l'expéditeur peut, dans l'interface d'intégration, choisir de conserver ou de de supprimer les données d'en-tête (et/ou de signature) avant envoi (par exemple dans le cas d'un envoi vers une messagerie SMS à format court si le message comporte une longue liste de destinataire...)

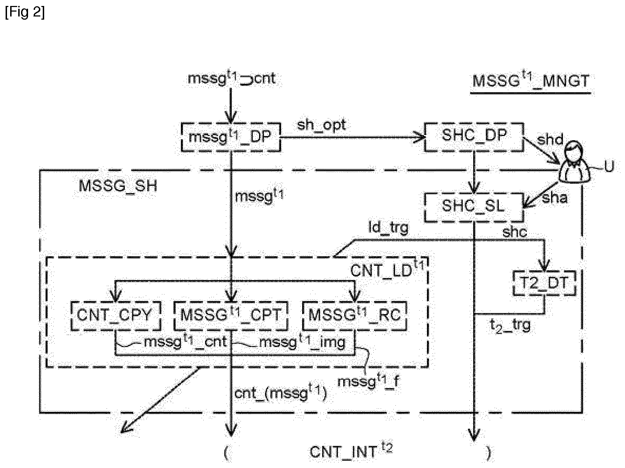

La figure 2 illustre un schéma simplifié des procédés de gestion de partage et de gestion de messages d'un premier type selon l'invention.

Le procédé de partage d'un message d'un premier type MSSG_SH à travers un réseau de communication N comporte une sélection d'une commande de partage SHC_SL à partir d'une interface de reproduction du premier message du premier type *mssg*^{*t*1}*.* La commande de partage shc déclenche une intégration du contenu du premier message du premier type dans un deuxième message d'un deuxième type CNT_INT^{t2} à transmettre à travers le réseau de communication N. Le deuxième type *t2* est distinct du premier type *t1.*

Notamment, un utilisateur U indique au moyen d'une action *sha* via une interface de saisie (saisie clavier, sélection souris, stylet, tactile, gestuelle, capture gestuelle...) la commande de partage shc qu'il sélectionne.

En particulier, la sélection d'une commande de partage SHC_SL déclenche *t2_trg* l'intégration CNT_INT^{t2}.

En particulier, le procédé de partage MSSG_SH comporte une détermination d'une interface de saisie d'un message du deuxième type T2_DT en fonction de la commande de partage sélectionnée shc. Par exemple, l'interface de saisie est déterminée parmi plusieurs dispositifs de messagerie disponibles sur un terminal mettant en œuvre le procédé de partage et/ou accessibles à partir de ce terminal.

En particulier, la détermination de l'interface de saisie du message du deuxième type T2_DT déclenche *t2_trg* l'intégration CNT_INT^{t2}.

En particulier, le procédé de partage MSSG_SH comporte un chargement du contenu du premier message du premier type CNT_LD^{t1} suite à la sélection d'une commande de partage SHC_SL. Notamment, le chargement du contenu du premier message du premier type CNT_LD^{t1} est déclenché soit directement par la sélection d'une commande de partage SHC_SL, soit par la détermination T2_DT.

En particulier, le chargement CNT_LD^{t1} comporte une copie CNT_CPY du contenu du premier message *mssg*^{*t*1}_*cnt* suite à la sélection SHC_SL.

En particulier, le chargement CNT_LD^{t1} comporte une capture MSSG^{t1}_CPT du contenu du premier message *mssg*^{*t*1}*_img,* notamment sous la forme d'une image *mssg*^{*t*1}_*img* suite à la sélection SHC_SL.

En particulier, le chargement CNT_LD^{t1} comporte l'enregistrement MSSG^{t1}_RC dans un fichier message *mssg*^{*t*1}*_f* du contenu du premier message suite à la sélection SHC_SL.

La figure 2 illustre aussi un procédé de gestion de messages MSSG^{t1}_MNGT d'un premier type *mssg*^{*t*1}*.* Ce procédé de gestion de messages MSSG^{t1}_MNGT d'un premier type comporte
- une reproduction MSSG^{t1}_DP d'un premier message du premier type *mssg*^{*t*1}*,* et
- une reproduction d'une interface de sélection de commande de partage SHC_DP à partir d'une interface de reproduction du premier message du premier type.

La commande de partage shc déclenche une intégration du contenu du premier message du premier type dans un deuxième message d'un deuxième type CNT_INT^{t2} à transmettre à travers le réseau de communication N. Le deuxième type *t2* est distinct du premier type *t1.*

En particulier, le procédé de gestion de messages du premier type MSSG^{t1}_MNGT comporte le procédé de partage illustré par la figure 2.

En particulier, la reproduction d'une interface de sélection de commande de partage SHC_DP diffuse à destination de l'utilisateur U un signal indiquant les commandes de partage disponibles *shd.* Ce signal de reproduction des commandes de partage disponibles shd est notamment une image, une vidéo, un signal audio...

Notamment la reproduction d'un premier message du premier type MSSG^{t1}_DP déclenche *sh_opt* la reproduction d'une interface de sélection de commande de partage SHC_DP notamment sous la forme d'un ou plusieurs boutons affichées correspondant soit chacun à un mode de partage : Tweet, SMS, MMS, etc. si le premier type est un courriel, ou courriel, Tweet, si le premier mode est un SMS... , soit à un accès à un menu de mode de partage; ou sous la forme d'un menu de mode de partage...

Dans un mode de réalisation particulier, un programme comprend des instructions de code de programme pour l'exécution des étapes du procédé de gestion de partage, et/ou du procédé de gestion de messages du deuxième type et/ou du procédé de partage et/ou du procédé de gestion de messages du premier type lorsque ledit programme est exécuté par un processeur.

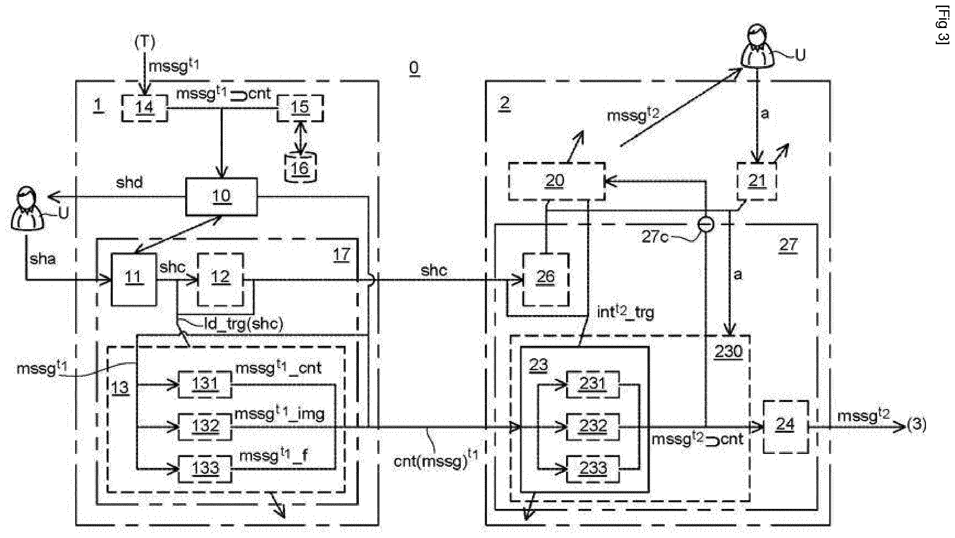

La figure 3 illustre des schémas simplifiés d'un gestionnaire de partage, d'un premier dispositif de messagerie d'un premier type, d'un distributeur de messages, d'un deuxième dispositif de messagerie d'un deuxième type selon l'invention, et d'une architecture les mettant en œuvre selon l'invention.

Un distributeur de messages d'un premier type 17 à travers un réseau de communication 3 comporte une interface de sélection d'une commande de partage 11 à partir de l'interface de reproduction du premier message du premier type 10. La commande de partage shc déclenche un intégrateur 23 du contenu du premier message du premier type *cnt*(*mssg*^{*t*1}) dans un deuxième message d'un deuxième type *mssg*^{*t*2} à transmettre à travers le réseau de communication 3. Le deuxième type *t2* est distinct du premier type *t1.*

Notamment, un utilisateur U indique au moyen d'une action *sha* via une interface de saisie 11 (saisie clavier, sélection souris, stylet, tactile, gestuelle, capture gestuelle...) la commande de partage *shc* qu'il sélectionne.

En particulier, l'interface de sélection d'une commande de partage 11 déclenche *t2_trg* directement l'intégrateur 23.

En particulier, le distributeur de messages du premier type 17 comporte un analyseur 12 permettant de déterminer une interface de saisie d'un message du deuxième type en fonction de la commande de partage sélectionnée shc. Par exemple, l'interface de saisie est déterminée parmi plusieurs dispositifs de messagerie disponibles sur un terminal 0 implémentant le gestionnaire de partage 17 et/ou accessibles à partir de ce terminal 0.

En particulier, l'analyseur 12 déterminant l'interface de saisie du message du deuxième type déclenche *t2_trg* l'intégrateur 23.

En particulier, le distributeur de messages du premier type 17 comporte un chargeur 13 du contenu du premier message du premier type suite à la sélection d'une commande de partage au moyen de l'interface de sélection 11. Notamment, le chargeur 13 du contenu du premier message du premier type est déclenché soit directement par l'interface de sélection 11 d'une commande de partage, soit par l'analyseur 12.

En particulier, le chargeur 13 comporte un enregistreur 131 du contenu du premier message *mssg*^{*t*1}*_cnt* dans une mémoire temporaire, tel qu'un presse-papier, suite à la sélection par l'interface de sélection 11.

En particulier, le chargeur 13 comporte un capteur 132 du contenu du premier message *mssg*^{*t*1}*_img,* notamment sous la forme d'une image *mssg*^{*t*1}_*img* suite à la sélection par l'interface de sélection 11.

En particulier, le chargeur 13 comporte un enregistreur 133 dans un fichier message *mssg*^{*t*1}*_f* du contenu du premier message suite à la sélection par l'interface de sélection 11.

Un premier dispositif de messagerie d'un premier type 1 comporte :
- une interface de reproduction 10 d'un premier message du premier type *mssg*^{*t*1}*,* et
- une interface de sélection d'une commande de partage 11 à partir de l'interface de reproduction 10 du premier message du premier type. La commande de partage shc déclenche un intégrateur 23 du contenu du premier message du premier type *cnt*(*mssg*^{*t*1}) dans un deuxième message d'un deuxième type *mssg*^{*t*2} à transmettre à travers le réseau de communication 3. Le deuxième type *t2* est distinct du premier type *t1.*

En particulier, le premier dispositif de messagerie 1 est du type messagerie électronique.

En particulier, le premier dispositif de messagerie 1 comporte le distributeur de messages du premier type 17.

En particulier, l'interface de reproduction 10 permet de diffuser à destination de l'utilisateur U l'interface de sélection de commande de partage 11 au moyen d'un signal indiquant les commandes de partage disponibles shd. Ce signal de reproduction des commandes de partage disponibles shd est notamment une image, une vidéo, un signal audio...

Notamment, l'interface de reproduction 10 déclenche, lors de la reproduction d'un premier message du premier type *mssg*^{*t*1}*,* la reproduction de l'interface de sélection de commande de partage 11 notamment sous la forme d'un ou plusieurs boutons affichées correspondant soit chacun à un mode de partage : Tweet, SMS, MMS, etc. si le premier type est un courriel, ou courriel, Tweet, si le premier mode est un SMS... , soit à un accès à un menu de mode de partage; ou sous la forme d'un menu de mode de partage...

En particulier, le premier dispositif de messagerie d'un premier type 1 comporte un récepteur de messages du premier type 14 provenant notamment d'un terminal tiers T et/ou un lecteur 15 de messages du premier type dans une base de messages de premier type 16. Un message du premier type lu ou reçu mssg^{t1} est reproduit par l'interface de reproduction 10. L'utilisateur U du terminal 0 implémentant le premier dispositif de messagerie du premier type 1 sélectionne un mode de partage *sha* du premier message reproduit *mssg*^{*t*1} au moyen de l'interface de sélection 11 qui déclenche l'intégrateur 23 du gestionnaire de partage de messages du premier type 27.

En particulier, le contenu du message du premier type lu ou reçu *cnt*(*mssg*^{*t*1}) est intégré dans un deuxième message d'un deuxième type au moyen de l'intégrateur 23. Ainsi, un terminal 0 implémentant le gestionnaire 27 et comportant un émetteur de messages du deuxième type 24 est apte à émettre le deuxième message intégrant le contenu du premier message *mssg*^{*t*1} ⊃ *cnt*(*mssg*^{*t*2}) via un réseau de communication 3.

Un gestionnaire de partage de messages d'un deuxième type 27 à travers un réseau de communication 3 comporte un intégrateur 23 du contenu d'un premier message du premier type *cnt*(*mssg*^{*t*1})*,* disponible dans un premier dispositif de messagerie du premier type 1, dans un deuxième message d'un deuxième type *mssg*^{*t*2} à transmettre 2 à travers le réseau de communication 3 suite à une sélection d'une commande de partage à partir d'une interface de reproduction 10 du premier message du premier type du premier dispositif de messagerie 1. Le deuxième type *t2* est distinct du premier type *t1.*

En particulier, l'intégrateur 23 est commandé *int*^{*t*2}_*trg* par une interface de sélection de commande de partage 11 (directement ou indirectement), notamment implémenté dans un premier dispositif de messagerie 1.

En particulier, le gestionnaire de partage de messages du deuxième type 27 comporte (non illustré) une interface de saisie du deuxième message du deuxième type 21 dont l'ouverture est effectuée suite à la sélection d'une commande de partage shc à partir de l'interface de reproduction du premier message du premier type 11 et préalablement au déclenchement de l'intégrateur 23.

En particulier, l'intégrateur 23 est déclenché *int*^{*t*2}_*trg* par l'ouverture de l'interface de saisie 21, elle-même déclenchée *t*2*_trg* par l'interface de sélection d'une commande de partage 11.

En particulier, le gestionnaire de partage de messages du deuxième type 27 comporte (non illustré) un générateur de message du deuxième type 26 déclenchant l'intégrateur 23 et/ou l'ouverture d'une interface de saisie 21.

Dans un mode de réalisation particulier, le générateur 26 est notamment déclenché par l'interface de sélection d'une commande de partage 11. Le deuxième message du deuxième type *mssg*^{*t*2} ainsi généré comporte le contenu du premier message du premier type *cnt*(*mssg*^{*t*1}): *mssg*^{*t*2} ⊃ *cnt.* Ce deuxième message du deuxième type *mssg*^{*t*2} est éventuellement reproduit par une interface de reproduction 20 permettant à l'utilisateur de compléter, au moyen d'une interface de saisie 21, le contenu du premier message du premier type *cnt*(*mssg*^{*t*1}) qui y a été intégré par d'autres données : texte, image, vidéo, etc... saisies, sélectionnées, respectivement, dans un presse papier ou dans un répertoire d'images, vidéos, etc. ou capturées par reconnaissances vocales, manuscrites, caméra, etc.

En particulier, l'intégrateur 23 comporte un enregistreur 231 permettant de coller un texte correspondant à une copie du contenu du premier message *mssg*^{*t*1}*_cnt* déclenché par l'interface de sélection 11.

En particulier, l'intégrateur 23 comporte un agrégateur d'image 232 permettant d'insérer dans le deuxième message *mssg*^{*t*2} une image du contenu du premier message *mssg*^{*t*1}_*img* déclenché par l'interface de sélection 11.

En particulier, l'intégrateur 23 comporte un agrégateur de fichier 233 permettant d'insérer dans le deuxième message *mssg*^{*t*2} un fichier message du contenu du premier message *mssg*^{*t*1}*_f* déclenché par l'interface de sélection 11.

Un deuxième dispositif de messagerie d'un deuxième type 2 comporte :
- une interface de reproduction 20 du deuxième message à transmettre *mssg*^{*t*2}*,* et
- une connexion 27c avec un intégrateur 23 permettant d'intégrer le contenu d'un premier message du premier type *cnt*(*mssg*^{*t*1})*,* disponible dans un premier dispositif de messagerie du premier type 1, dans le deuxième message du deuxième type *mssg*^{*t*2} à transmettre à travers le réseau de communication 3 suite à une sélection d'une commande de partage à partir d'une interface de reproduction 10 du premier message du premier type du premier dispositif de messagerie1. Le deuxième type *t2* est distinct du premier type *t1.*

En particulier, le deuxième dispositif de messagerie 2 comporte une interface de saisie 21 d'un deuxième message à transmettre.

En particulier, le gestionnaire de partage de messages 27 est implémenté hors du deuxième dispositif de messagerie 2 et fournit au deuxième dispositif de messagerie 2 le deuxième message *mssg*^{*t*2} dans lequel a été intégré le contenu du premier message *cnt*(*mssg*^{*t*1})*.* De manière alternative, le deuxième dispositif de messagerie 2 comporte un distributeur de messages d'un deuxième type 27.

En particulier, le deuxième dispositif de messagerie 2 est d'un des types parmi les suivants :
- messagerie pour messages courts mobiles,
- messagerie pour messages multimédia mobiles,
- messagerie pour messages instantanés courts IP.

En particulier, le deuxième dispositif de messagerie d'un deuxième type 2 comporte notamment un intégrateur de données 230 dans le deuxième message du deuxième type *mssg*^{*t*2}*.* Notamment, les données comportent des données capturées et/ou des données saisies sur une interface de saisie 21 du terminal 0 implémentant le gestionnaire de messages 27.

En particulier, le deuxième dispositif de messagerie d'un deuxième type 2 comporte le gestionnaire de partage 27 illustré par la figure 3. L'agrégateur de données 230 dans un deuxième message du deuxième type *mssg*^{*t*2} comporte, par exemple, l'intégrateur du contenu 23du premier message du premier type *mssg*^{*t*1}*.*

En particulier, le deuxième dispositif de messagerie d'un deuxième type 2 comporte une émetteur 24 du deuxième message du deuxième type *mssg*^{*t*2} intégrant le contenu du premier message du premier type *cnt*(*mssg*^{*t*1}) à travers le réseau de communication 3 à destination d'au moins un utilisateur. L'utilisateur destinataire peut être l'utilisateur U du terminal 0 utilisant un terminal distinct du terminal 0 et/ou un utilisateur distinct de l'utilisateur U utilisant le terminal 0 ou un terminal distinct du terminal 0.

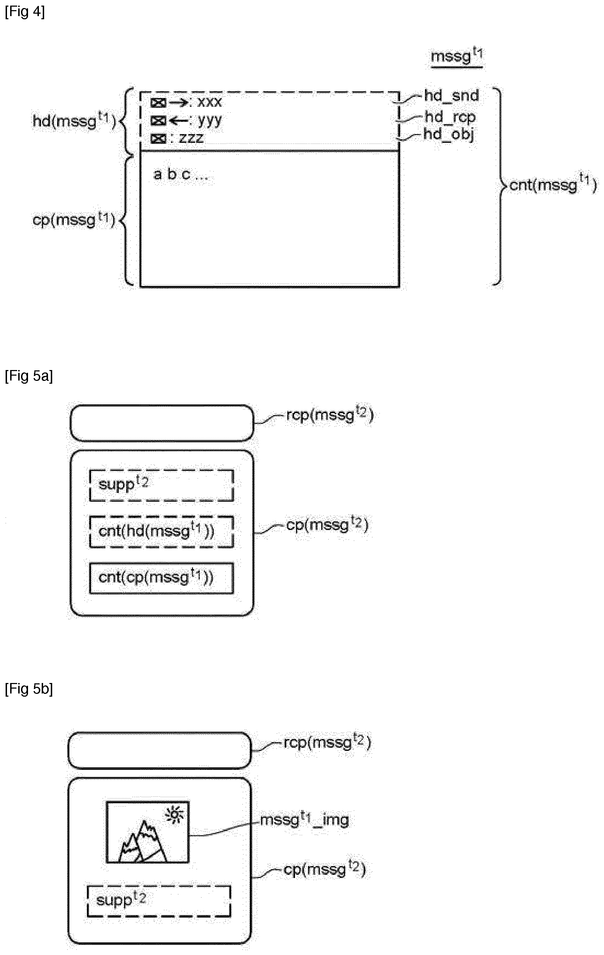

La figure 4 illustre un schéma simplifié d'un exemple de premier message d'un premier type selon l'invention.

Le premier message du premier type est notamment de type :
- courriel,
- messages courts mobiles,
- messagerie pour messages multimédia mobiles,
- messagerie pour messages instantanés courts IP, etc.

Le contenu du premier message du premier type *cnt*(*mssg*^{*t*1}) comporte au moins le texte du corps du premier message du premier type *cp*(*mssg*^{*t*1}) avec sa mise en forme ou non, et éventuellement le(s) image(s), tableau(x), graphes(s), etc. inclus dans le corps du premier message du premier type *cp*(*mssg*^{*t*1})*,* le cas échéant.

En particulier, le contenu du premier message du premier type *cnt*(*mssg*^{*t*1}) comporte aussi au moins une partie de l'en-tête du premier message du premier type *hd*(*mssg*^{*t*1})*.* L'en-tête du premier message du premier type *hd*(*mssg*^{*t*1}) comporte au moins le destinataire du message *hd_rcp.* Eventuellement, l'en-tête du premier message du premier type *hd*(*mssg*^{*t*1}) comporte aussi l'émetteur du message *hd_snd* et/ou l'objet du message *hd_obj.*

Les figures 5a à 5c illustrent des schémas simplifiés de messages du deuxième type intégrant le contenu d'un premier message d'un premier type distinct du deuxième type.

Le deuxième message du deuxième type *mssg*^{*t*2} comporte au moins un corps du deuxième message du deuxième type *cp*(*mssg*^{*t*2}) et un destinataire du deuxième message du deuxième type *rcp*(*mssg*^{*t*2})*.* Selon l'invention, le corps du deuxième message du deuxième type *cp*(*mssg*^{*t*2}) comporte, suite à l'intégration CNT_INT^{t2} (illustré notamment par la figure 1), le contenu du premier message du premier type *cnt*(*mssg*^{*t*1})*.*

En particulier, le corps du deuxième message du deuxième type *cp*(*mssg*^{*t*2}) comporte aussi des données supplémentaires *supp*^{*t*2} telles que des données saisies, captées... par l'utilisateur du terminal mettant en œuvre le procédé de gestion de messages du deuxième type.

Ainsi, l'utilisateur peut compléter le contenu du premier message du premier type inclus automatiquement dans le deuxième message du deuxième type par des données supplémentaires *supp^{t2}* sous forme de texte, image, graphes, tableaux, vidéos, etc. Cela permet à l'utilisateur de transférer le contenu du premier message du premier type non pas au moyen d'un autre message du premier type comme cela est classiquement effectué par la fonction de transfert, aussi nommé « forward » en anglais, du courriel ou des SMS mais au moyen d'un deuxième message d'un deuxième type distinct du premier type.

La figure 5a illustre une intégration du contenu d'un premier message d'un premier type distinct du deuxième type sous forme d'une copie du contenu du premier message du premier type, selon l'invention.

Dans le cas où l'intégration est effectuée par collage du contenu CNT_PST comme illustré par la figure 1, le corps du deuxième message du deuxième type *cp*(*mssg*^{*t*2}) comporte, suite à l'intégration CNT_INT^{t2}, au moins le contenu du corps du premier message du premier type *cnt*(*cp*(*mssg*^{*t*1}))*,* notamment tel qu'illustré par la figure 4. Par le contenu du corps est entendu au moins le texte du corps de ce premier message du premier type, et éventuellement le(s) image(s), tableau(x), graphes(s), etc. inclus dans le corps de ce premier message du premier type *cp*(*mssg*^{*t*1})*,* le cas échéant.

En particulier, le corps du deuxième message du deuxième type *cp*(*mssg*^{*t*2}) comporte aussi, suite à l'intégration CNT_INT^{t2}, le contenu d'au moins une partie de l'en-tête du premier message du premier type *cnt*(*hd*(*mssg*^{*t*1}))*,* c'est-à-dire le destinataire du message *hd_rcp,* et/ou l'émetteur du message *hd_snd* et/ou l'objet du message *hd_obj.*

La figure 5b illustre une intégration du contenu d'un premier message d'un premier type distinct du deuxième type sous forme d'une image du contenu du premier message du premier type selon l'invention.

Dans le cas où l'intégration est effectuée par insertion d'une image du premier message IMG_JN comme illustré par la figure 1, le corps du deuxième message du deuxième type *cp*(*mssg*^{*t*2}) comporte, suite à l'intégration CNT_INT^{t2}, une image du premier message du premier type *mssg*^{*t*1}*_img.*

L'image du premier message du premier type comporte notamment une photographie du contenu du premier message du premier type, en particulier du corps du contenu. Par le contenu du corps est entendu au moins le texte du corps de ce premier message du premier type, et éventuellement le(s) image(s), tableau(x), graphes(s), etc. inclus dans le corps de ce premier message du premier type *cp*(*mssg*^{*t*1})*,* le cas échéant.

En particulier, le contenu du premier message du premier type comporte aussi au moins une partie de l'en-tête du premier message du premier type *cnt(hd(mssg^{t1}*))*,* c'est-à-dire le destinataire du message *hd_rcp,* et/ou l'émetteur du message *hd_snd* et/ou l'objet du message *hd_obj.*

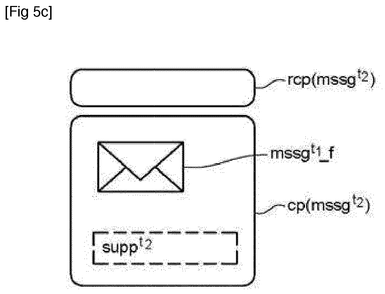

La figure 5c illustre une intégration du contenu d'un premier message d'un premier type distinct du deuxième type sous forme d'un fichier du premier message du premier type selon l'invention.

Dans le cas où l'intégration est effectuée par insertion d'un fichier du premier message F_JN comme illustré par la figure 1, le corps du deuxième message du deuxième type *cp*(*mssg*^{*t*2}) comporte, suite à l'intégration CNT_INT^{t2}, un fichier contenant le premier message du premier type *mssg*^{*t*1}_*img* lisible par un dispositif de messagerie du premier type.

Le fichier du premier message du premier type comporte notamment le contenu du premier message du premier type, en particulier du corps du contenu, lisible par un dispositif de messagerie du premier type. Par le contenu du corps est entendu au moins le texte du corps de ce premier message du premier type, et éventuellement le(s) image(s), tableau(x), graphes(s), etc. inclus dans le corps de ce premier message du premier type *cp*(*mssg*^{*t*1})*,* le cas échéant.

En particulier, le contenu du premier message du premier type comporte aussi au moins une partie de l'en-tête du premier message du premier type *cnt*(*hd*(*mssg*^{*t*1}))*,* c'est-à-dire le destinataire du message *hd_rcp,* et/ou l'émetteur du message *hd_snd* et/ou l'objet du message *hd_obj.*

Ainsi, le destinataire du deuxième message, s'il dispose d'un dispositif de messagerie du premier type pourra lire le contenu de ce premier message en extrayant le fichier du deuxième message et en l'important dans son dispositif de messagerie du premier type même s'il n'a pas accès au réseau de réception de message du premier type.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessus. Un composant matériel correspond à tout élément d'un ensemble matériel (ou hardware) apte à mettre en œuvre une fonction ou un ensemble de fonctions.

## Revendications

1. Procédé de gestion de partage d'un message d'un premier type à travers un réseau de communication comportant, suite à une sélection d'une commande de partage à partir d'une interface de reproduction du premier message du premier type, une intégration du contenu du premier message du premier type dans un deuxième message d'un deuxième type à transmettre à travers le réseau de communication, le deuxième type étant distinct du premier type.

2. Procédé de gestion de partage selon la revendication précédente **caractérisé en ce que** le procédé de gestion de partage comporte une ouverture d'une interface de saisie du deuxième message du deuxième type suite à la sélection d'une commande de partage à partir d'une interface de reproduction du premier message du premier type et préalablement à l'intégration.

3. Procédé de gestion de partage selon l'une quelconque des revendications précédentes, **caractérisé en ce que** l'intégration comporte un collage d'un texte correspondant à une copie du contenu du premier message déclenchée par la sélection.

4. Procédé de gestion de partage selon l'une quelconque des revendications 1 ou 2, **caractérisé en ce que** l'intégration comporte une insertion d'une image du contenu du premier message déclenchée par la sélection.

5. Procédé de gestion de partage selon l'une quelconque des revendications 1 ou 2, **caractérisé en ce que** l'intégration comporte une insertion d'un fichier message du contenu du premier message déclenchée par la sélection.

6. Procédé de partage d'un message d'un premier type à travers un réseau de communication comportant une sélection d'une commande de partage à partir d'une interface de reproduction du premier message du premier type, la commande de partage déclenchant une intégration du contenu du premier message du premier type dans un deuxième message d'un deuxième type à transmettre à travers le réseau de communication, le deuxième type étant distinct du premier type.

7. Procédé de partage selon la revendication précédente, **caractérisé en ce que** le procédé de partage comporte une détermination d'une interface de saisie d'un message du deuxième type en fonction de la commande de partage sélectionnée.

8. Procédé de gestion de messages d'un premier type comportant
- une reproduction d'un premier message du premier type, et
- une reproduction d'une interface de sélection d'une commande de partage à partir d'une interface de reproduction du premier message du premier type, la commande de partage déclenchant une intégration du contenu du premier message du premier type dans un deuxième message d'un deuxième type à transmettre à travers le réseau de communication, le deuxième type étant distinct du premier type.

9. Programme comprenant des instructions de code de programme pour l'exécution des étapes du procédé de gestion de partage selon l'une quelconque des revendications 1 à 6 et/ou du procédé de partage selon la revendication 7 et/ou du procédé de gestion de messages du premier type selon la revendication 8 lorsque ledit programme est exécuté par un processeur.

10. Distributeur de messages d'un premier type à travers un réseau de communication comportant une interface de sélection d'une commande de partage à partir de l'interface de reproduction du premier message du premier type, la commande de partage déclenchant un intégrateur du contenu du premier message du premier type dans un deuxième message d'un deuxième type à transmettre à travers le réseau de communication, le deuxième type étant distinct du premier type.

11. Premier dispositif de messagerie d'un premier type comportant
- une interface de reproduction d'un premier message du premier type, et
- une interface de sélection d'une commande de partage à partir de l'interface de reproduction du premier message du premier type, la commande de partage déclenchant un intégrateur du contenu du premier message du premier type dans un deuxième message d'un deuxième type à transmettre à travers le réseau de communication, le deuxième type étant distinct du premier type.

12. Premier dispositif de messagerie selon la revendication précédente **caractérisé en ce que** le premier dispositif de messagerie est du type messagerie électronique.

13. Gestionnaire de partage de messages d'un deuxième type comportant un intégrateur du contenu d'un premier message du premier type disponible dans un premier dispositif de messagerie du premier type dans un deuxième message d'un deuxième type à transmettre à travers le réseau de communication suite à une sélection d'une commande de partage à partir d'une interface de reproduction du premier message du premier type du premier dispositif de messagerie, le deuxième type étant distinct du premier type.

14. Deuxième dispositif de messagerie d'un deuxième type comportant
- une interface de saisie d'un deuxième message à transmettre,
- une interface de reproduction du deuxième message à transmettre, et
- une connexion avec un intégrateur permettant d'intégrer le contenu d'un premier message du premier type disponible dans un premier dispositif de messagerie du premier type dans le deuxième message du deuxième type à transmettre à travers le réseau de communication suite à une sélection d'une commande de partage à partir d'une interface de reproduction du premier message du premier type du premier dispositif de messagerie, le deuxième type étant distinct du premier type.

15. Deuxième dispositif de messagerie selon la revendication précédente **caractérisé en ce que** le deuxième dispositif de messagerie est d'un des types parmi les suivants :
- messagerie pour messages courts mobiles,
- messagerie pour messages multimédia mobiles,
- messagerie pour messages instantanés courts IP.
